# EUROPEAN PATENT APPLICATION

(11) **EP 3 713 103 A1**
(43) Date of publication of application: **23.09.2020**
(21) Application number: 17932193.0
(22) Date of filing: 17.11.2017
(51) Int. Cl.: H04B 1/715, H04W 72/04

(54) **WIRELESS TRANSMISSION DEVICE AND WIRELESS RECEPTION DEVICE**

(71) Applicant: NTT DOCOMO, INC., Chiyoda-ku Tokyo 100-6150 (JP)
(72) Inventor: MOROGA, Hideyuki, Tokyo 100-6150 (JP); TAKEDA, Kazuki, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2017/041568
(87) International publication number: WO 2019/097700

(57) **Abstract**

A radio transmission apparatus may include a transmission section (105) that transmits a radio link signal including a demodulation reference signal and a control section (101). The control section (101) may perform hopping of a position at which the demodulation reference signal is mapped to a radio resource for the radio link signal to a different frequency at a different time.

## Description

### Technical Field

The present invention relates to a radio transmission apparatus and a radio reception apparatus.

### Background Art

Long Term Evolution (LTE) has been specified for achieving a higher data rate, lower latency, and the like in a Universal Mobile Telecommunications System (UMTS) network (see Non-Patent Literature (hereinafter referred to as "NPL") 1). Future systems of LTE have also been studied for achieving a broader bandwidth and a higher speed based on LTE. Examples of future systems of LTE include the systems called LTE-Advanced (LTE-A), Future Radio Access (FRA), 5th generation mobile communication system (5G), 5G plus (5G+), New Radio Access Technology (New-RAT)), and the like.

Future radio communication systems (for example, 5G) are expected to support a wide range of frequencies from low carrier frequencies to high carrier frequencies. For example, one or both of a propagation channel environment and a required condition largely differ depending on each of frequency bands including low carrier frequencies and high carrier frequencies, and thus, for future radio communication systems, flexible support in arrangement (may also be referred to as "mapping") of a reference signal and the like is desired.

For example, in a future radio communication system, it is conceivable that a reference signal (for example, a demodulation reference signal) for a port (layer) allocated to a user terminal is arranged on a radio resource based on various methods and transmitted to the user terminal. In such case, notification of information relating to the port allocated to the user terminal and information relating to a method of arrangement of the reference signal (RS) is provided, for example, from a radio base station to the user terminal.

Also, for future radio communication systems, in order to achieve reduction of processing time required for channel estimation and signal demodulation in a subframe (or a slot), mapping a demodulation reference signal on the front side of the subframe has been studied (NPL 2). A demodulation reference signal may be indicated as "DMRS" (Demodulation Reference Signal), "DM-RS" or "demodulation RS".

### Citation List

### Non-Patent Literature

NPL 1
   3GPP TS 36.300 v13.4.0, "Evolved Universal Terrestrial Radio Access (E-UTRA) and Evolved Universal Terrestrial Radio Access Network (E-UTRAN); Overall description; Stage 2 (Release 13)," June 2016
NPL 2
   R1-165575, Qualcomm, Ericsson, Panasonic, NTT Docomo, ZTE, Convida, Nokia, ASB, Sony, Intel, "Way Forward On Frame Structure," May 2016.

### Summary of Invention

### Technical Problem

Where a same mapping pattern for a DMRS is applied for different cells, a collision of DMRSs in the different cells may occur. Where a collision of DMRSs occurs, accuracy of channel estimation using the DMRSs are lowered, which may result in deterioration in radio signal reception characteristic.

An object of the present invention is to reduce a collision incidence between demodulation reference signals between cells to suppress deterioration in radio signal reception characteristic.

### Solution to Problem

A radio transmission apparatus according to one aspect of the present invention includes: a transmission section that transmits a radio link signal including a demodulation reference signal; and a control section that performs hopping of a position at which the demodulation reference signal is mapped to a radio resource for the radio link signal to a different frequency at a different time.

A radio reception apparatus according to one aspect of the present invention includes: a reception section that receives a radio link signal including a demodulation reference signal; and a processing section that performs reception processing of the radio link signal, using the demodulation reference signal, in which hopping of a position at which the demodulation reference signal is mapped to a radio resource for the radio link signal is performed to a different frequency at a different time.

### Advantageous Effects of Invention

According to an aspect of the present invention, it is achievable to reduce a collision incidence between demodulation reference signals between cells. Therefore, it is achievable to suppress a deterioration in radio signal reception characteristic.

### Brief Description of Drawings

FIG. 1 is a block diagram illustrating an example of an overall configuration of a radio base station according to an embodiment;
FIG. 2 is a block diagram illustrating an example of an overall configuration of a user terminal according to an embodiment;
FIG. 3A is a diagram illustrating an example of a first mapping pattern for a DMRS in an embodiment;
FIG. 3B is a diagram illustrating an example of a second mapping pattern for a DMRS in an embodiment;
FIG. 4A is a diagram illustrating a first example of DMRS frequency hopping according to an embodiment;
FIG. 4B is a diagram illustrating a first example of DMRS frequency hopping according to an embodiment;
FIG. 5A is a diagram illustrating a second example of DMRS frequency hopping according to an embodiment;
FIG. 5B is a diagram illustrating a second example of DMRS frequency hopping according to an embodiment;
FIG. 6 is a diagram illustrating a third example of DMRS frequency hopping according to an embodiment;
FIG. 7 is a diagram illustrating a fourth example of DMRS frequency hopping according to an embodiment;
FIG. 8 is a diagram illustrating a fourth example of DMRS frequency hopping according to an embodiment;
FIG. 9 is a diagram illustrating a fourth example of DMRS frequency hopping according to an embodiment; and
FIG. 10 is a diagram illustrating hardware configurations of a radio base station and a user terminal according to an embodiment.

### Description of Embodiments

An embodiment of the present invention will be described in detail below with reference to the drawings.

### (Embodiment)

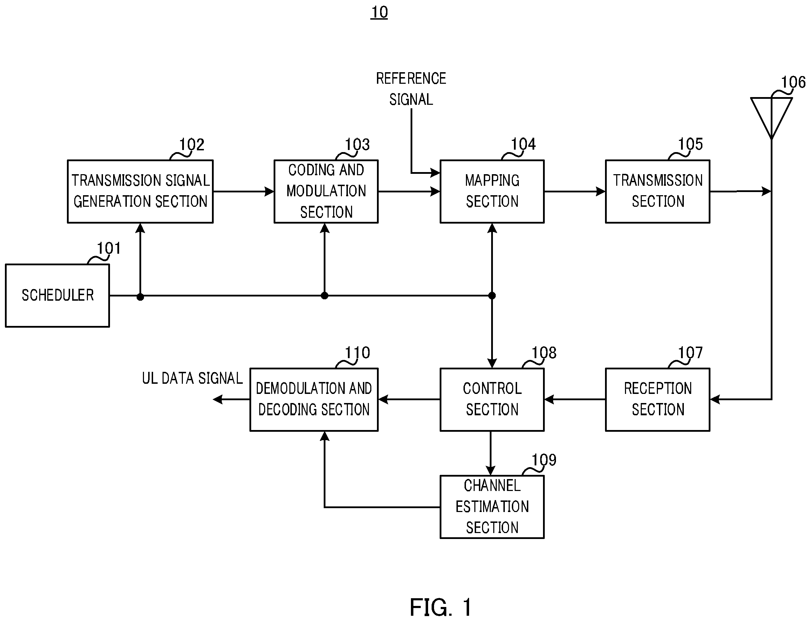

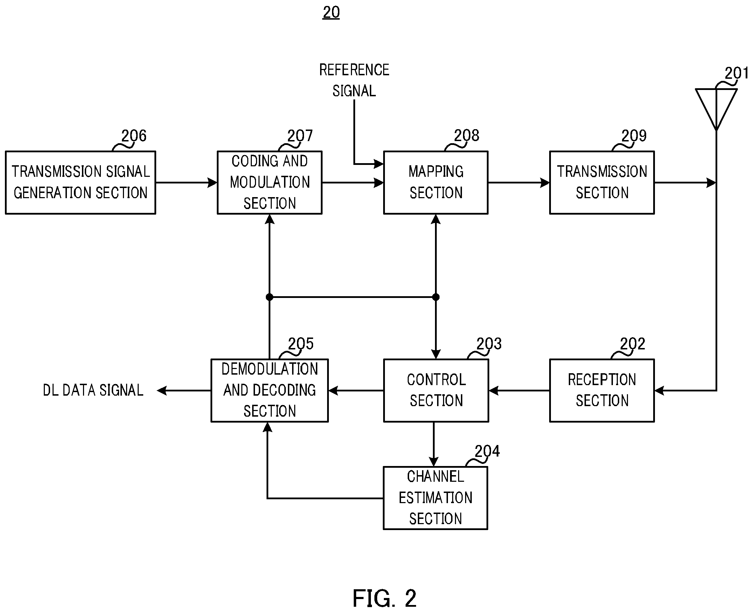

A radio communication system according to the present embodiment includes radio base station 10 (also called, for example, an eNB (eNodeB) or a gNB (gNodeB)), which is illustrated in FIG. 1, and user terminal 20 (also called, for example, a UE (User Equipment)), which is illustrated in FIG. 2. User terminal 20 is wirelessly connected (or accesses) to radio base station 10. In other words, radio links are formed between radio base station 10 and user terminal 20.

Each of radio signals propagating on the radio links may be referred to as "radio link signal". A radio link in a direction from radio base station 10 to user terminal 20 may be referred to as "downlink (DL)". Accordingly, a radio link signal transmitted from radio base station 10 to user terminal 20 may be referred to as "DL signal". On the other hand, a radio link for transmission from user terminal 20 to radio base station 10 may be referred to as "uplink (UL)". Accordingly, a radio link signal transmitted from user terminal 20 to radio base station 10 may be referred to as "UL signal".

Radio base station 10 transmits a DL control signal to user terminal 20 using a DL control channel (for example, a PDCCH (Physical Downlink Control Channel)). Radio base station 10 transmits a DL data signal and a DM-RS to user terminal 20 using a DL data channel (for example, a DL shared channel: a PDSCH (Physical Downlink Shared Channel)).

Further, user terminal 20 transmits a UL control signal to radio base station 10 using a UL control channel (for example, a PUCCH (Physical Uplink Control Channel)) or a UL data channel (for example, a UL shared channel: a PUSCH (Physical Uplink Shared Channel)). User terminal 20 transmits a UL data signal and a DMRS to radio base station 10 using a UL data channel (for example, a UL shared channel: a PUSCH (Physical Uplink Shared Channel)).

As an example, the radio communication system in the present embodiment supports two types of DMRS mapping patterns (configuration types 1 and 2). Then, the radio communication system in the present embodiment supports various DMRS arrangement methods.

The downlink channel and the uplink channel through which radio base station 10 and user terminal 20 perform transmission/reception are not limited to a PDCCH, a PDSCH, a PUCCH and a PUSCH such as mentioned above or the like. The downlink channel and the uplink channel through which radio base station 10 and user terminal 20 perform transmission and reception may be, for example, other channels such as a PBCH (Physical Broadcast Channel) and a RACH (Random Access Channel).

Further, in FIGS. 1 and 2, a waveform of one or both of DL and UL signals generated in radio base station 10 and user terminal 20 may be a signal waveform based on OFDM (Orthogonal Frequency Division Multiplexing) demodulation. Alternatively, the waveforms of one or both of the DL and UL signals may be a signal waveform based on SC-FDMA (Single Carrier-Frequency Division Multiple Access) or DFT-S-OFDM (DFT-Spread-OFDM). Alternatively, the waveform of one or both of the DL and UL signals may be another signal waveform. In FIGS. 1 and 2, illustration of component sections for generating a signal waveform (for example, an IFFT processing section, a CP addition section, a CP removal section, an FFT processing section or the like) is omitted.

### <Radio base station>

FIG. 1 is a block diagram illustrating an example of an overall configuration of radio base station 10 according to the present embodiment. Radio base station 10 includes scheduler 101, transmission signal generation section 102, coding and modulation section 103, mapping section 104, transmission section 105, antenna 106, reception section 107, control section 108, channel estimation section 109 and demodulation and decoding section 110. Radio base station 10 may include an MU-MIMO (Multi-User Multiple-Input Multiple-Output) configuration for communicating with a plurality of user terminals 20 simultaneously. Alternatively, radio base station 10 may include an SU-MIMO (Single-User Multiple-Input Multiple-Output) configuration for communicating with single user terminal 20. Alternatively, radio base station 10 may include both of the SU-MIMO and MU-MIMO configurations.

Scheduler 101 performs scheduling (for example, resource allocation and port allocation) of DL signals (DL data signals, DL control signals, DMRSs and the like). Further scheduler 101 performs scheduling (for example, resource allocation and port allocation) of UL signals (UL data signals, UL control signals, DMRSs and the like).

In scheduling, scheduler 101 selects one mapping pattern configuration indicating resource elements on which a DMRS of a DL signal is to be mapped from "configuration type 1" and "configuration type 2". For example, scheduler 101 selects one mapping pattern from configuration type 1 and configuration type 2 based on at least one of a propagation channel environment (for example, communication quality and frequency selectivity), a required condition (such as a moving speed of a terminal supported), and a capability of radio base station 10 or user terminal 20. Alternatively, one mapping pattern may be determined in advance.

Further, scheduler 101 outputs information on the scheduling to transmission signal generation section 102 and mapping section 104. As described later, scheduler 101 may be understood as an example of a control section that performs hopping of a position at which a DMRS is mapped on a DL signal to a different frequency at a different time.

Furthermore, scheduler 101 configures, for example, an MCS (Modulation and Coding Scheme) (a coding rate, a modulation method or the like) for a DL data signal and a UL data signal based on quality of the channels between radio base station 10 and user terminal 20. Scheduler 101 outputs information of the configured MCS to transmission signal generation section 102 and coding and modulation section 103. The MCS is not limited to the case where radio base station 10 configures the MCS but user terminal 20 may configure the MCS. Where user terminal 20 configures the MCS, radio base station 10 just has to receive information on the MCS from user terminal 20 (not illustrated).

Transmission signal generation section 102 generates a transmission signal (including a DL data signal and a DL control signal). For example, the DL control signal includes DCI including the scheduling information (for example, setting information) or the MCS information output from scheduler 101. Transmission signal generation section 102 outputs the generated transmission signal to coding and modulation section 103.

Coding and modulation section 103 performs, for example, coding processing and demodulation processing of the transmission signal input from transmission signal generation section 102, based on the MCS information input from scheduler 101. Coding and modulation section 103 outputs the demodulated transmission signal to mapping section 104.

Mapping section 104 maps the transmission signal input from coding and modulation section 103 on a radio resource (DL resource), based on the scheduling information (for example, DL resource allocation) input from scheduler 101. Furhter, mapping section 104 maps a DMRS on a radio resource (DL resource) based on the scheduling information. Mapping section 104 outputs the DL signal mapped to the radio resource to transmission section 105.

Transmission section 105 performs transmission processing, such as upconversion and amplification, of the DL signal input from mapping section 104 and transmits the resulting radio frequency signal (DL signal) via antenna 106.

Reception section 107 performs reception processing, such as amplification and downconversion, of a radio frequency signal (UL signal) received via antenna 106 and outputs the UL signal to control section 108. The UL signal may include a UL data signal and a DMRS.

Control section 108 demaps the UL data signal and the DMRS from the UL signal input from reception section 107, based on the scheduling information (for example, UL resource allocation information) input from scheduler 101. Then, control section 108 outputs the UL data signal to demodulation and decoding section 110 and outputs the DMRS to channel estimation section 109.

Channel estimation section 109 performs channel estimation using the DMRS of the UL signal and outputs a channel estimation value, which is a result of the estimation, to demodulation and decoding section 110.

Demodulation and decoding section 110 performs demodulation and decoding processing of the UL data signal input from control section 108, based on the channel estimation value input from channel estimation section 109. Further, demodulation and decoding section 110 transfers the demodulated and decoded UL data signal to an application section (not illustrated). The application section performs, for example, processing relating to a layer that is higher than the physical layer or the MAC layer.

A block including scheduler 101, transmission signal generation section 102, coding and modulation section 103, mapping section 104 and transmission section 105 may be understood as an example of a radio transmission apparatus included in radio base station 10. Further, a block including reception section 107, control section 108, channel estimation section 109 and demodulation and decoding section 110 may be understood as an example of a radio reception apparatus included in radio base station 10.

Further, as described later, a block including control section 108, channel estimation section 109 and demodulation and decoding section 109 may be understood as a processing section that performs reception processing of a UL signal using a DMRS mapped on a time domain of the UL signal.

### <User Terminal>

FIG. 2 is a block diagram illustrating an example of an overall configuration of user terminal 20 according to the present embodiment. User terminal 20 includes antenna 201, reception section 202, control section 203, channel estimation section 204, demodulation and decoding section 205, transmission signal generation section 206, coding and modulation section 207, mapping section 208 and transmission section 209.

Reception section 202 performs reception processing, such as amplification and downconversion, of a radio frequency signal (DL signal) received via antenna 201 and outputs the DL signal to control section 203. The DL signal may include a DL data signal and a DMRS.

Control section 203 demaps a DL control signal and the DMRS from the DL signal input from reception section 202. Then, control section 203 outputs the DL control signal to demodulation and decoding section 205 and outputs the DMRS to channel estimation section 204.

Control section 203 controls the reception processing of the DL signal. Further, control section 203 demaps the DL data signal from the DL signal based on scheduling information (for example, DL resource allocation information or the like) input from reception section 202, and outputs the DL data signal to demodulation and decoding section 205.

Channel estimation section 204 performs channel estimation using the DMRS demapped from the DL signal and outputs a channel estimation value, which is a result of the estimation, to demodulation and decoding section 205.

Demodulation and decoding section 205 demodulates the DL control signal input from control section 203. Further, demodulation and decoding section 205 performs decoding processing of the demodulated DL control signal (for example, blind detection processing). Demodulation and decoding section 205 outputs scheduling information for the relevant terminal (for example, DL/UL resource allocation information or the like) obtained as a result of the decoding of the DL control signal to control section 203 and mapping section 208 and outputs the MCS information for the DL data signal to coding and modulation section 207.

Further, demodulation and decoding section 205 performs demodulation and decoding processing of the DL data signal input from control section 203, based on the MCS information for the DL data signal, the MCS information being included in the DL control signal input from control section 203, using the channel estimation value input from channel estimation section 204.

Furthermore, demodulation and decoding section 205 transfers the demodulated and decoded DL data signal to an application section (not illustrated). The application section performs, for example, processing relating to a layer that is higher than the physical layer or the MAC layer.

Transmission signal generation section 206 generates a transmission signal (including a UL data signal or a UL control signal) and outputs the generated transmission signal to coding and modulation section 207.

Coding and modulation section 207 performs, for example, coding processing and modulation processing of the transmission signal input from transmission signal generation section 206, based on the MCS information input from demodulation and decoding section 205. Coding and modulation section 207 outputs the modulated transmission signal to mapping section 208.

Mapping section 208 maps the transmission signal input from coding and modulation section 207, on a radio resource (UL resource), based on the scheduling information (UL resource allocation) input from demodulation and decoding section 205. Further, mapping section 208 maps a DMRS on the radio resource (UL resource) based on the scheduling information.

The mapping of the DMRS on the radio resource may be, for example, controlled by control section 203. For example, as described later, control section 203 may be understood as an example of a control section that performs hopping of a position at which a DMRS is mapped to a radio resource for a UL signal to a different frequency at a different time.

Transmission section 209 performs transmission processing, such as upconversion and amplification, of the UL signal (containing, for example, the UL data signal and the DMRS) input from mapping section 208 and transmits the resulting radio frequency signal (UL signal) via antenna 201.

A block including transmission signal generation section 206, coding and modulation section 207, mapping section 208 and transmission section 209 may be understood as an example of a radio transmission apparatus included in user terminal 20. Further, a block including reception section 202, control section 203, channel estimation section 204 and demodulation and decoding section 205 may be understood as an example of a radio reception apparatus included in user terminal 20.

Further, as described later, a block including control section 203, channel estimation section 204 and demodulation and decoding section 205 may be understood as an example of a processing section that performs reception processing of a DL signal using a DMRS mapped to a radio resource for the DL signal.

In the above-described radio communication system including radio base station 10 and user terminal 20, as an example of a DMRS, a front-loaded DMRS may be used. Hereinafter "front-loaded DMRS" may be referred to as "FL-DMRS".

An FL-DMRS is arranged on the front side in a time direction of a resource unit (or a subframe), which is a unit of resource allocation. As a result of an FL-DMRS being arranged on the front side, in the radio communication system, it is possible to reduce processing time required for channel estimation and demodulation processing.

In a unit of resource allocation in the time direction, an additional DMRS for an FL-DMRS may be mapped at a position distant in the time direction from a position on which the FL-DMRS is mapped (for example, symbol). Hereinafter, for simplicity, "additional DMRS" may be indicated as "A-DMRS".

A DMRS may include an FL-DMRS or both of the FL-DMRS and an A-DMRS. When it is unnecessary to distinguish "FL-DMRS" and "A-DMRS" from each other, "FL-DMRS" and "A-DMRS" are simply collectively referred to as "DMRS(s)".

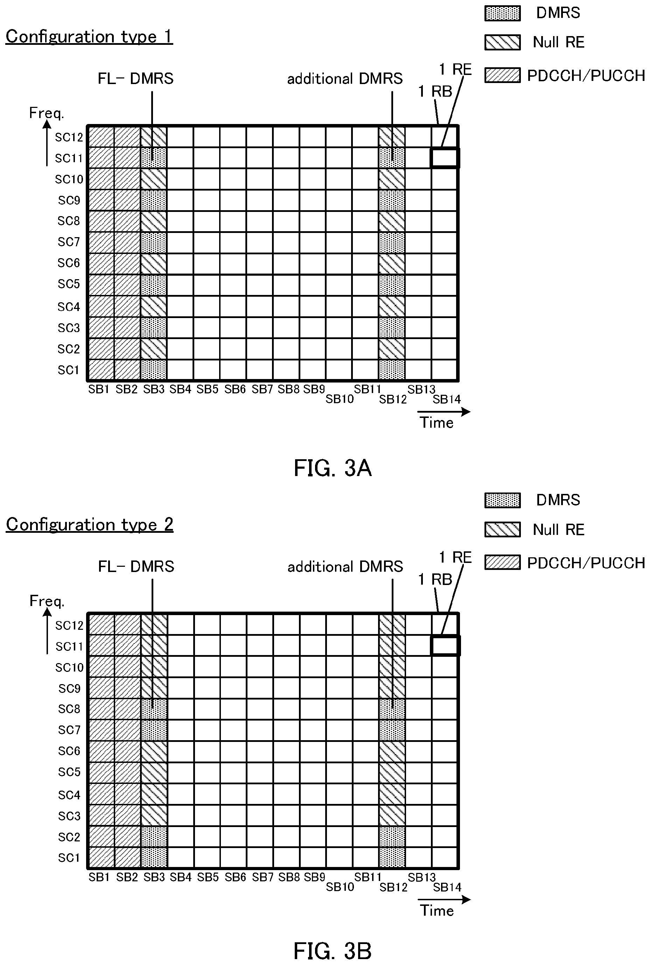

As examples of an FL-DMRS mapping pattern, two mapping patterns (configuration types 1 and 2) are conceivable. The two mapping patterns will be described below with reference to FIGS. 3A and 3B, respectively.

### <First Mapping Pattern (Configuration Type 1)>

FIG. 3A is a diagram illustrating an example of a first mapping pattern for a DMRS according to an embodiment. FIG. 3A illustrates an example of a DMRS mapping pattern, for example, where attention is focused on one port (for example, port #0 or port #1 in configuration type 1).

The mapping pattern illustrated in FIG. 3A indicates a mapped position of a DMRS in a resource unit (RU), which is an example of a unit of resource allocation. An RU may be referred to as a slot, a resource block (RB), a resource block pair or the like.

One resource block has, for example, a configuration in which 168 resource elements (RE) are arranged in such a manner that 14 resource elements are arranged in the time direction and 12 resource elements are arranged in a frequency direction. One RE is a radio resource region defined by one symbol and one subcarrier. In other words, one resource block is configured by 14 symbols and 12 subcarriers.

A "slot" may be sectioned into "mini-slot" in the time direction. A "mini-slot" may be configured by a number of symbols in a range of, for example, 1 to 14 symbols.

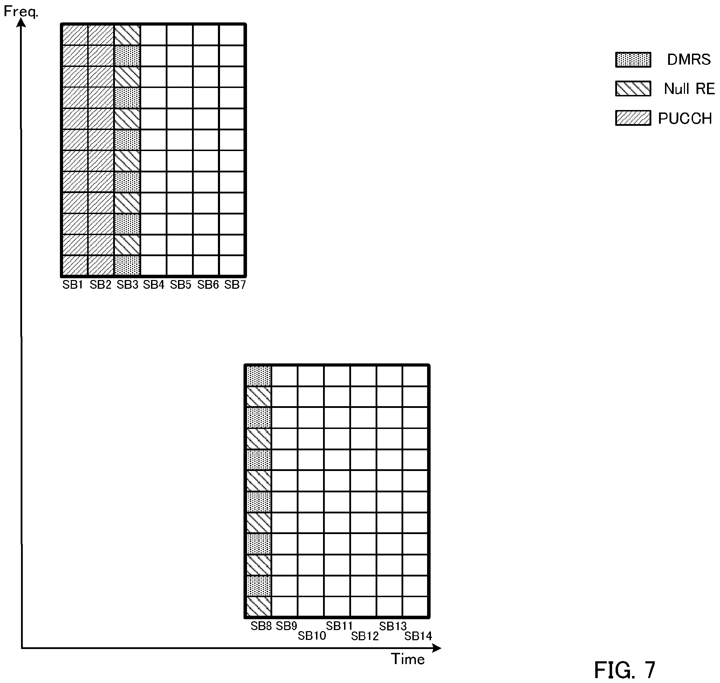

In the below description, 14 symbols in the time direction of one slot may be indicated as SB1 to SB 14 in the order from the left to the right. Meanwhile, 12 subcarriers in the frequency direction of one slot may be indicated as SC1 to SC12 in the order from the bottom to the top. "One slot" may be regarded as corresponding to an example of a "unit time" for a radio link signal (which may be either a DL signal or a UL signal). However, a "unit time for a radio link signal" is not limited to "one slot" but may be a period of time including an arbitrarily set number of symbols. For example, a period of time of one hop region, which will be described later with reference to FIGS. 7 to 9, may correspond to a "unit time for a radio link signal".

On REs of first two symbols (SB1 and SB2) of one slot, for example, a control channel (for example, a PDCCH or a PUCCH) may be arranged. The number of symbols for a control channel is not limited to two symbols but may be three symbols. In other words, a control channel may be arranged on any of first to third symbols (SB1 to SB3) in one slot.

In one slot, a plurality of DMRSs may be arranged dispersedly in the frequency direction. As a non-limiting example, as illustrated in FIG. 3A, DMRSs (may be one or both of FL-DMRSs and A-DMRSs) in a same port may be arranged at an interval of one subcarrier. This arrangement may be called "Comb2" or IFDM (RPF = 2). "IFDM" is an abbreviation of "Interleaved Frequency Division Multiplexing".

In FIG. 3A, a data signal (a PDSCH or a PUSCH) may be arranged on REs of third to fourteenth symbols on which no DMRS is arranged. Where attention is focused on one certain port, an RE on which none of a DMRS and other signals is arranged may be referred to as "Null RE".

However, even though an RE is a "Null RE" where attention is focused on one certain port, a DMRS, a data channel (for example, a PDSCH or a PUSCH) signal or another RS that is different from the DMRS (for example, a CSI-RS or the like) may be arranged at the position of "Null RE" if attention is focused on another port. The "CSI-RS" is an abbreviation of "Channel State Information-Reference Signal".

As an non-limiting example, as illustrated in FIG. 3A, an FL-DMRS may be arranged on a symbol immediately after the symbols on which the control channel is arranged in the time direction, for example, a third symbol (SB3) in one slot.

However, the position in the time direction at which an FL-DMRS is arranged is not limited to the third symbol (SB3). For example, an FL-DMRS may be mapped to a fourth symbol (SB4) or a fifth symbol (SB5). For example, in the case of the UL, a DMRS may be arranged on a first symbol of the symbols on which the PUSCH is mapped.

The number of symbols on which an FL-DMRS is arranged is not limited to one symbol. For example, in one slot, an FL-DMRS may be arranged on two symbols. For example, an FL-DMRS may be arranged on the third symbol (SB3) and the fourth symbol (SB4) in one slot.

An A-DMRS may be arranged on a symbol distant in the time direction from the symbol on which the FL-DMRS is arranged, in one slot.

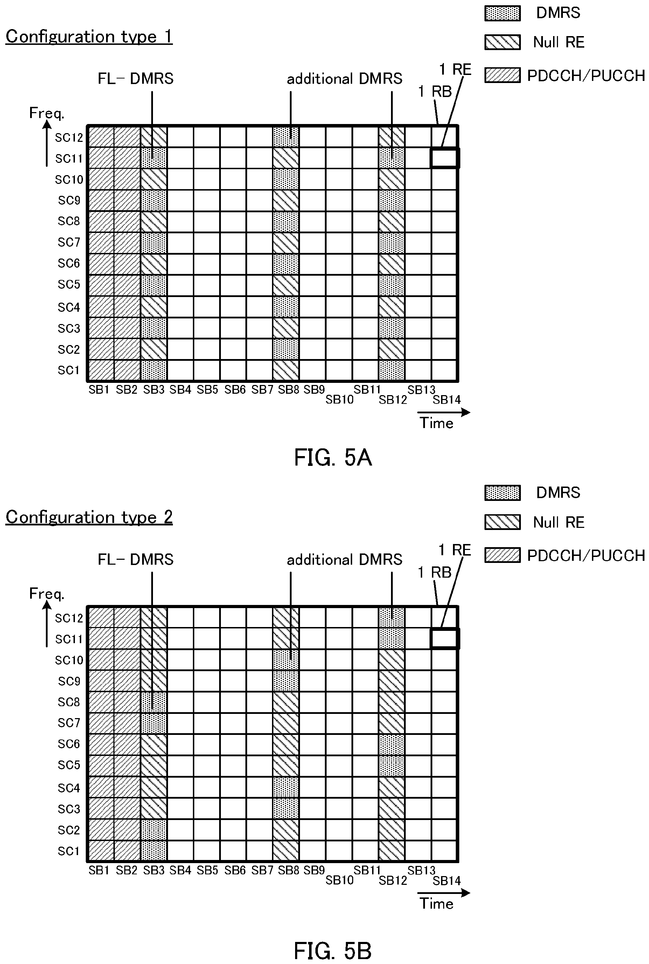

Where an A-DMRS is to be arranged on one symbol in one slot, for example, as illustrated in FIG. 3A, the A-DMRS may be arranged on a twelfth symbol (SB 12). Where an A-DMRS is to be arranged on two symbols in one slot, for example, the A-DMRS may be arranged on an eighth symbol (SB8) and the twelfth symbol (SB 12) (see, for example, FIG. 5A referred to later). Where an A-DMRS is to be arranged on three symbols in one slot, for example, the A-DMRS may be arranged on a sixth symbol (SB6), a ninth symbol (SB9) and the twelfth symbol (SB 12).

In the frequency direction, an A-DMRS may be arranged with a density that is the same as a density of arrangement of the FL-DMRS in the frequency direction. As a non-limiting example, as illustrated in FIG. 3A, an A-DMRS may be arranged in a pattern that is the same as an arrangement pattern of the FL-DMRS in the frequency direction.

### <Second Mapping Pattern (Configuration Type 2)>

FIG. 3B is a diagram illustrating an example of a second mapping pattern for a DMRS in the present embodiment. In FIG. 3B, for example, an example of a mapping pattern for a DMRS where attention is focused on one port (for example, port #0 or port #1 in configuration type 1) is indicated.

On REs of first two symbols (SB 1 and SB2) of one slot, for example, a control channel (for example, a PDCCH or a PUCCH) may be arranged. The number of symbols for a control channel is not limited to two symbols but may be three symbols. In other words, a control channel may be arranged on any of first to third symbols (SB1 to SB3) in one slot.

In one slot, a plurality of DMRSs may be arranged dispersedly in the frequency direction. As a non-limiting example, as illustrated in FIG. 3B, DMRSs (may be one or both of FL-DMRSs and A-DMRSs) in a same port may be arranged at an interval of four subcarriers. The interval of arrangement of DMRSs (may be one or both of FL-DMRSs and A-DMRSs) in a same port in the frequency direction is not limited to four subcarriers.

In FIG. 3B, a data signal (a PDSCH or a PUSCH) may be arranged on REs of third to fourteenth symbols in which no DMRS is arranged. Where attention is focused on one certain port, an RE on which none of a DMRS and other signals is arranged may be referred to as "Null RE".

However, even though an RE is "Null RE" where attention is focused on one certain port, a DMRS, a data channel (for example, a PDSCH or a PUSCH) signal or another RS that is different from the DMRS (for example, a CSI-RS or the like) may be arranged at the position of "Null RE" if attention is focused on another port.

In FIG. 3B, an FL-DMRS may be arranged on a symbol immediately after the symbols on which the control channel is arranged in the time direction, for example, the third symbol (SB3) in one slot.

However, the position in the time direction at which an FL-DMRS is arranged is not limited to the third symbol (SB3). For example, an FL-DMRS may be mapped to a fourth symbol (SB4) or a fifth symbol (SB5). For example, in the case of the UL, a DMRS may be arranged on a first symbol of the symbols on which the PUSCH is mapped.

The number of symbols on which an FL-DMRS is arranged is not limited to one symbol. For example, in one slot, an FL-DMRS may be arranged on two symbols. For example, an FL-DMRS may be arranged on the third symbol (SB3) and the fourth symbol (SB4) in one slot.

An A-DMRS may be arranged on a symbol distant in the time direction from the symbol on which the FL-DMRS is arranged, in one slot.

Where an A-DMRS is to be arranged on one symbol in one slot, for example, as illustrated in FIG. 3B, the A-DMRS may be arranged on a twelfth symbol (SB 12). Where an A-DMRS is to be arranged on two symbols in one slot, for example, the A-DMRS may be arranged on an eighth symbol (SB8) and the twelfth symbol (SB 12) (see, for example, FIG. 5B referred to later). Where an A-DMRS is to be arranged on three symbols in one slot, for example, the A-DMRS may be arranged on a sixth symbol (SB6), a ninth symbol (SB9) and the twelfth symbol (SB12).

In the frequency direction, an A-DMRS may be arranged with a density that is the same as a density of arrangement of the FL-DMRS in the frequency direction. As a non-limiting example, as illustrated in FIG. 3B, an A-DMRS may be arranged in the frequency direction in a pattern that is the same as an arrangement pattern of the FL-DMRS in the frequency direction.

Various arrangement methods are applied for DMRSs in each port specified in the above-described first and second mapping patterns, and such DMRSs are arranged in a slot. The above-described DMRS mapping patterns are mere examples and the present invention is not limited to such examples.

### (Collision of DMRSs)

Where a plurality of cells use a same mapping pattern illustrated in FIG. 3A or FIG. 3B for a same port number, a collision of DMRSs occurs between the cells. For example, in a situation in which for a plurality of cells, a same configuration type is set and a same port number is used, a same mapping pattern is likely to be used. Where a collision of DMRSs occurs between cells, accuracy of channel estimation using the DMRSs on the radio signal reception side is lowered and the radio signal reception characteristic thus deteriorates.

Therefore, in the present embodiment, a probability of collision of DMRSs between different cells is reduced by changing a position at which a DMRS is mapped is changed to a different frequency at a different time (which may be referred to as "frequency hopping" for simplicity).

Frequency hopping of a DMRS enables suppressing continuation of use of a same DMRS mapping pattern by different cells. Consequently, interference between DMRSs can be randomized. Therefore, it is possible to suppress decreasing in accuracy of channel estimation using the DMRSs, and thus, possible to suppress deterioration in radio signal reception characteristic.

Some examples of DMRS frequency hopping will be described below.

### (First example of DMRS frequency hopping)

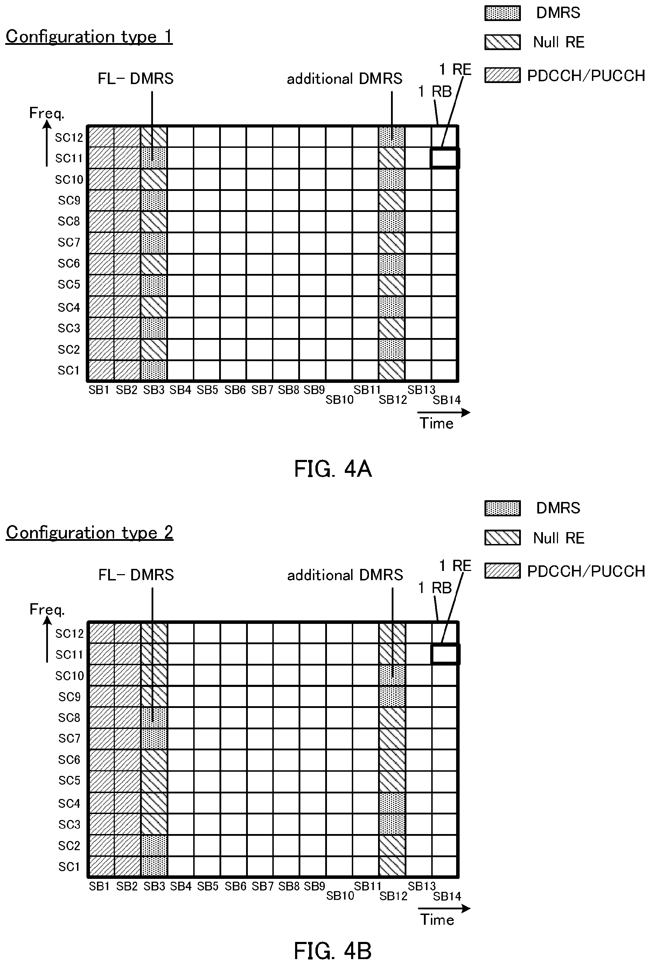

FIGS. 4A and 4B are diagrams each illustrating a first example of DMRS frequency hopping according to an embodiment.

FIG. 4A illustrates an example of DMRS frequency hopping based on the first mapping pattern (configuration type 1). FIG. 4B illustrates an example of frequency hopping of a DMRS based on the second mapping pattern (configuration type 2).

In FIGS. 4A and 4B, arrangement of a control channel (for example, a PDCCH or a PUCCH) and a pattern of an FL-DMRS may be the same as those in FIGS. 3A and 3B, respectively. On the other hand, in FIGS. 4A and 4B, an A-DMRS is mapped on frequencies that are different from those in FIGS. 3A and 3B, respectively (frequency hopping).

For example, in FIG. 4A, a pattern of arrangement in the frequency direction of an A-DMRS on a twelfth symbol (SB 12) corresponds to a pattern shifted by one subcarrier in the frequency direction from the pattern of arrangement in the frequency direction of the FL-DMRS in FIG. 3A. Further, in FIG. 4B, a pattern of arrangement in the frequency direction of an A-DMRS arranged on SB12 corresponds to a pattern shifted by two subcarriers in the frequency direction from that in FIG. 3B.

In FIG. 4A, upon the pattern of the A-DMRS in the frequency direction being subjected to cyclic frequency shifting by an even number of subcarriers, the even number being no less than two, the resulting pattern of arrangement in the frequency direction is the same as the pattern in FIG. 3A. Therefore, in the case of FIG. 4A, there are two patterns as a pattern of arrangement of an A-DMRS.

On the other hand, in FIG. 4B, where the amount of frequency shifting of a pattern of arrangement of an A-DMRS is one subcarrier, there are six patterns of arrangement in the frequency direction, and where the amount of frequency shifting of a pattern of arrangement of an A-DMRS is two subcarriers, there are three patterns of arrangement in the frequency direction. However, the amount of frequency shifting is not limited to these examples.

For the number of patterns available for a pattern of arrangement of a DMRS in the frequency direction in each of "configuration type 1" and "configuration type 2" described above, the same as above applies to the figures referred to in the below description.

As described above, frequency hopping of a pattern of arrangement of an A-DMRS enables suppression of continuation of use of a same A-DMRS arrangement pattern by different cells. Consequently, interference between A-DMRSs can be randomized. Therefore, it is possible to suppress decreasing in accuracy of channel estimation using the A-DMRSs, and thus, possible to suppress deterioration in radio signal reception characteristic.

Although each of the examples in FIGS. 4A and 4B is an example in which an A-DMRS of an FL-DMRS and an A-DMRS is subjected to frequency hopping, conversely, an FL-DMRS may be subjected to frequency hopping. Alternatively, both an FL-DMRS and an A-DMRS can individually be subjected to frequency hopping.

### (Second Example of DMRS Frequency Hopping)

FIGS. 5A and 5B are diagrams each illustrating a second example of DMRS frequency hopping according to an embodiment.

FIG. 5A indicates an example of DMRS frequency hopping based on the first mapping pattern (configuration type 1) and FIG. 5B indicates an example of DMRS frequency hopping based on the second mapping pattern (configuration type 2).

In the second example, a plurality of A-DMRSs may be arranged dispersedly in the time direction in one slot. For example, as illustrated in FIGS. 5A and 5B, an A-DMRS may be arranged on each of an eighth symbol (SB8) and a twelfth symbol (SB 12) in one slot. In FIGS. 5A and 5B, arrangement of a control channel (for example, a PDCCH or a PUCCH) and arrangement of an FL-DMRS may be the same as those in FIGS. 3A and 3B, respectively.

Where a plurality of A-DMRSs are arranged dispersedly in the time direction in one slot, the plurality of A-DMRSs may individually be subjected to frequency hopping.

For example, as illustrated in FIG. 5A, of a first A-DMRS arranged on SB8 and a second A-DMRS arranged on SB12, the first A-DMRS may be subjected to frequency hopping. Additionally or alternatively, the second A-DMRS arranged on SB12 may be subjected to frequency hopping. An amount of the frequency hopping may be the same or different between the first A-DMRS and the second A-DMRS. Mapping patterns that are different in the frequency direction may be employed for the plurality of A-DMRSs, respectively, or mapping patterns that are the same in the frequency direction may be applied for all of the A-DMRSs.

Further, as illustrated in FIG. 5B, both a first A-DMRS arranged on SB8 and a second A-DMRS arranged on SB12 may be subjected to frequency hopping. An amount of the frequency hopping may be the same or different between the first A-DMRS arranged on SB8 and the second A-DMRS arranged on SB12. FIG. 5B indicates an example in which the first A-DMRS is subjected to frequency hopping by two subcarriers and the second A-DMRS arranged on SB12 is subjected to frequency hopping by four subcarriers.

One of the first and second A-DMRSs may be subjected to frequency hopping. Where A-DMRSs are arranged on three symbols in one slot, for example, A-DMRSs are arranged on SB6, SB9 and SB12, respectively, the A-DMRSs may individually be subjected to frequency hopping. Respective amounts of the frequency hopping of the A-DMRSs on the three symbols may be the same or may be partly or totally different from one another.

Although each of the examples in FIGS. 5A and 5B is an example in which an FL-DMRS is not subjected to frequency hopping, an FL-DMRS may be subjected to frequency hopping. In this case, the A-DMRSs may be subjected to frequency hopping or not subjected to frequency hopping.

As described above, in order to enhance a temporal following capability in channel estimation, where a plurality of A-DMRSs are arranged dispersedly in the time direction in one slot, also, continuation of use of a same A-DMRS arrangement pattern by different cells can be suppressed. Consequently, interference between the A-DMRSs can be randomized. Therefore, it is possible to suppress decreasing in accuracy of channel estimation using the A-DMRSs, and thus, possible to suppress deterioration in radio signal reception characteristic.

### (Third Example of DMRS Frequency Hopping)

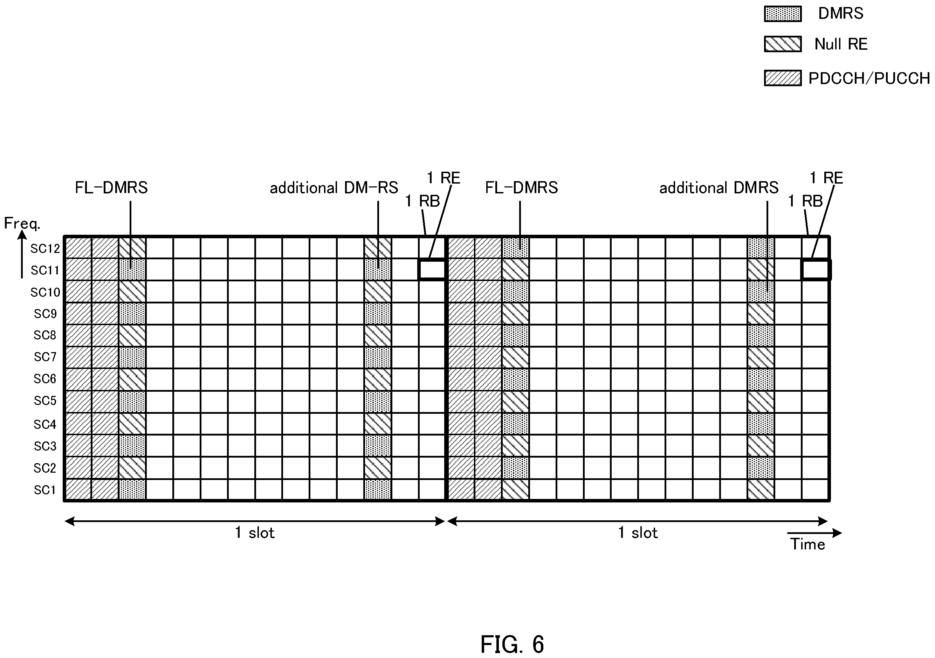

FIG. 6 is a diagram illustrating a third example of DMRS frequency hopping according to an embodiment. The third example is an example in which a mapped position in the frequency direction of a DMRS is changed in units of a slot.

For example, as illustrated in FIG. 6, in a first slot, the DMRS arrangement pattern illustrated in FIG. 3A may be applied and in a second slot, an arrangement pattern in which both an FL-DMRS and an A-DMRS are subjected to frequency hopping by one subcarrier may be applied.

In the second slot, as in FIG. 4A, the FL-DMRS may not be subjected to frequency hopping. Meanwhile, in the first slot, as described with reference to FIG. 4A, either an FL-DMRS or an A-DMRS may be subjected to frequency hopping. Either or both of patterns of arrangement of DMRSs (may be one or both of an FL-DMRS and an A-DMRS) in the frequency direction just has to be different between slots or in each slot.

For example, in the first slot, the DMRS arrangement pattern illustrated in FIG. 5A may be applied and in the second slot, the DMRS arrangement pattern illustrated in FIG. 5B may be applied.

Any two of the DMRS arrangement patterns illustrated in FIGS. 4A, 4B, 5A and 5B may selectively be applied for two slots. For example, for the first slot, the DMRS arrangement pattern illustrated in FIG. 4A or 4B may be applied and for the second slot, the DMRS arrangement pattern illustrated in FIG. 5A or 5B may be applied. For example, for the first slot, the DMRS arrangement pattern illustrated in FIG. 5A or 5B may be applied and for the second slot, the DMRS arrangement pattern illustrated in FIG. 4A or 4B may be applied. The arrangement pattern(s) illustrated in at least one of FIG(S). 4A, 4B, 5A and 5B and another arrangement pattern may selectively be applied in units of one or a plurality of slots.

As described above, hopping a mapped position of a DMRS in the frequency direction between slots (or between slots and in each slot) enables suppressing continuation of use of a same DMRS arrangement pattern by different cells over a plurality of slots. Consequently, interference between the DMRSs can be randomized. Therefore, it is possible to suppress decreasing in accuracy of channel estimation using the DMRSs, and thus, possible to suppress deterioration in radio signal reception characteristic.

### (Fourth Example of DMRS Frequency Hopping)

FIGS. 7 to 9 are diagrams each illustrating a fourth example of DMRS frequency hopping according to an embodiment. The fourth example is an example of DMRS frequency hopping where frequency hopping within a slot is applied for the UL.

FIGS. 7, 8 and 9 each illustrate an example of DMRS frequency hopping based on the first mapping pattern (configuration type 1).

As illustrated in FIGS. 7 to 9, one slot may be sectioned into a first hop region (SB1 to SB7) and a second hop region (SB8 to SB14) in the time direction. In each of the examples in FIGS. 7 to 9, hopping of the second hop region is performed to a frequency band that is lower than that of the first hop region. Hopping of the second hop region may be performed to a frequency band that is higher than that of the first hop region.

In FIGS. 7 to 9, for example, a control channel (for example, a PUCCH) may be arranged on REs of first two symbols (SB 1 and SB2) in the first hop region. The number of symbols for a control channel is not limited to two symbols but may be three symbols. In other words, a control channel may be arranged on any of first to third symbols (SB 1 to SB3) in one slot.

In FIG. 7, a DMRS may be arranged on a third symbol (SB3) in the first hop region. However, an arranged position in the time direction of a DMRS is not limited to the third symbol (SB3). For example, a DMRS may be mapped to a fourth symbol (SB4) or a fifth symbol (SB5).

The number of symbols on which a DMRS is arranged in the first hop region is not limited to one symbol. For example, a DMRS may be arranged on two symbols in the first hop region. For example, a DMRS may be arranged on the third symbol (SB3) and the fourth symbol (SB4).

In the second hop region, a DMRS may be arranged on a first one (for example, SB8) of symbols on which a PUSCH is mapped.

As described above, where a DMRS is arranged in each of the first hop region and the second hop region, hopping of a mapped position of the DMRS may be performed to a frequency that is different between the first hop region and the second hop region. For example, as illustrated in FIG. 7, the DMRS mapped to the first symbol (SB8) in the second hop region may be subjected to frequency hopping.

The DMRS arranged on the third symbol in the first hop region may be subjected to frequency hopping without hopping of the DMRS mapped to the first symbol (SB8) in the second hop region. Alternatively, in the first hop region and the second hop region, the respective mapped positions of the DMRS may individually be subjected to frequency hopping.

In the example in FIG. 7, a plurality of DMRSs may be arranged dispersedly in the time direction within one or both of the first hop region and the second hop region. For example, each of the first hop region and the second hop region may be regarded as a "slot" and either of the DMRS arrangement patterns described with reference to FIGS. 4A and 5A is selectively applied to any of the hop regions.

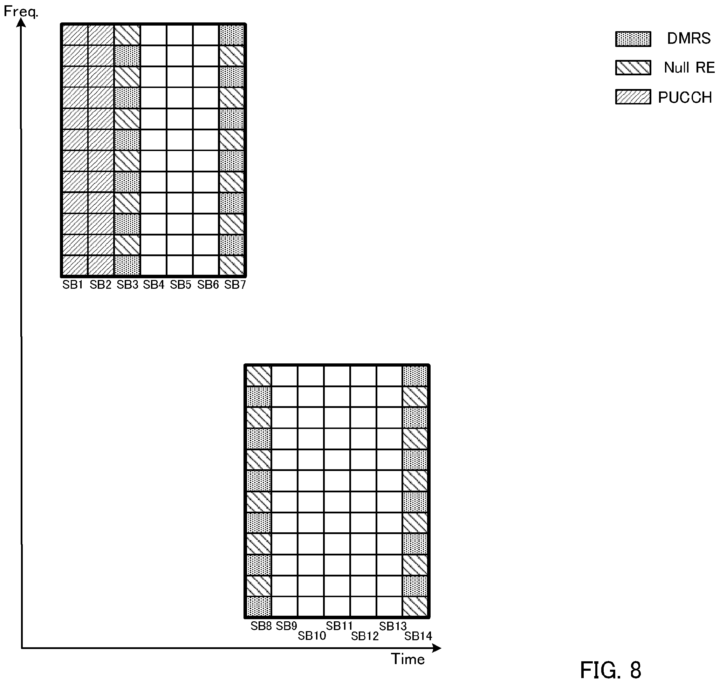

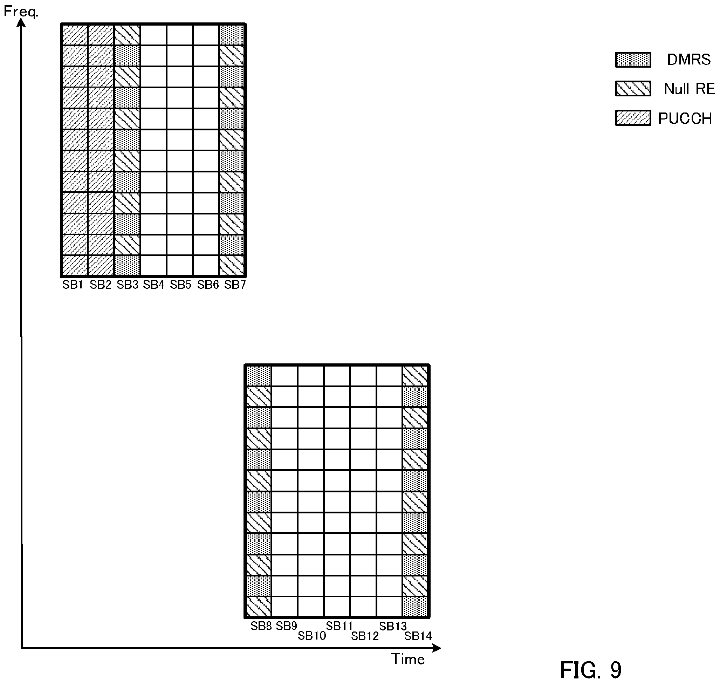

On the other hand, in FIGS. 8 and 9, DMRSs may be arranged on a third symbol (SB3) and a last symbol (seventh symbol (SB7)) in a first hop region. The DMRS arranged on the last symbol in the first hop region may be regarded as corresponding to an "A-DMRS". The DMRSs corresponding to three symbols may be arranged dispersedly in the time direction in the first hop region.

In a second hop region, for example, DMRSs may be arranged on a first symbol (SB8) and a last symbol (SB14). The DMRSs corresponding to three symbols may be arranged dispersedly in the time direction in the first hop region.

Although in each of the examples illustrated in FIGS. 8 and 9, a plurality of DMRSs are arranged on each of the first hop region and the second hop region, a plurality of DMRSs may be arranged on one of the first hop region and the second hop region. For example, in FIGS. 8 and 9, no DMRS may be arranged on the last symbol (SB7) in the first hop region. A DMRS may be arranged on one of the first symbol (SB8) and the last symbol (SB 14) in the second hop region and no DMRS may be arranged on the other.

In the examples in FIGS. 8 and 9, hopping of a mapped position of a DMRS may be performed to a frequency that is different between the first hop region and the second hop region. For example, as illustrated in FIG. 8, of the DMRSs mapped to the first symbol (SB8) and the last symbol (SB 14) in the second hop region, the DMRS mapped to SB14 may be subjected to frequency hopping.

Alternatively, as illustrated in FIG. 9, of the DMRSs mapped to the first symbol (SB8) and the last symbol (SB14) in the second hop region, the DMRS mapped to SB8 may be subjected to frequency hopping.

As in the examples illustrated in FIGS. 8 and 9, where a plurality of DMRSs are arranged dispersedly in the time direction in one hop region, for example, as described with reference to FIGS. 5A and 5B, hopping of respective mapped positions of the plurality of DMRSs may be performed to frequencies that are different relative to each other. Different DMRS mapping patterns may be applied to the first hop region and the second hop region.

For example, each of the first hop region and the second hop region in each of FIGS. 8 and 9 may be regarded as a "slot" and either of the DMRS arrangement patterns described with reference to FIGS. 4B and 5B may selectively be applied to either of the hop regions.

The number of hop regions is not limited to two. Three or more hop regions may be set in the time direction. Where three or more hop regions are set, the frequency hopping (pattern) illustrated in FIG. 7 or FIG. 8 may be applied to a part or all of the hop regions.

The plurality of hop regions are not limited to those in the case where the plurality of hop regions each includes a same number of symbols but may include different numbers of symbols. For example, where the number of hop regions is two, a first hop region may include ten symbols and a second hop region may include four symbols.

According to the above-described fourth example of DMRS frequency hopping, for UL signals, it is possible to suppress continuation of use of a same DMRS arrangement pattern by user terminals 20 in different cells. Consequently, interference between the DMRSs can be randomized. Therefore, in radio base station 10 on the UL signal reception side, it is possible to suppress decreasing in accuracy of channel estimation using the DMRSs, and thus, possible to suppress deterioration in UL signal reception characteristic.

### (Entity that sets DMRS frequency hopping (pattern))

DMRS frequency hopping (patterns) for a DL signal and a UL signal may be set by, for example, radio base station 10.

For example, in radio base station 10, based on the determined frequency hopping pattern, an arranged position of a DMRS on a DL signal may be determined and a DMRS may be mapped on the arranged position.

For example, upon reception of notification of information on the frequency hopping (pattern) determined in radio base station 10, user terminal 20 identifies the arranged position of the DMRS and performs reception processing of the DL signal or performs mapping of a DMRS on a UL signal.

The notification of information on the DMRS frequency hopping (pattern) enables the DMRS arranged position to be flexibly changed as appropriately.

It is conceivable that the DMRS frequency hopping (pattern) is set by radio base station 10, but mapping patterns for a plurality of cells may be determined in a higher layer and set for relevant radio base stations 10.

### (Notification of Information on DMRS Frequency Hopping)

The above-described "notification" of information on a DMRS frequency hopping (pattern) may implicitly be performed in association with some sort of information or may explicitly be performed.

Non-limiting examples of the information with which the information on a DMRS frequency hopping (pattern) is associated in the implicit notification include a cell ID, a user index, a slot index and a symbol index.

The information on DMRS frequency hopping (pattern) may be associated with any one or a plurality of a cell ID, a user index, a slot index and a symbol index. The association enables the DMRS frequency hopping (pattern) to be implicitly identified, enabling reduction of signaling for notification.

For the explicit notification, (a) one or both of higher layer configuration and higher layer signaling (for example, RRC (Radio Resource Control) signaling) may be used. Alternatively, for the explicit notification, (b) one or both of MAC layer signaling and physical (PHY) layer signaling may be used. Alternatively, a hybrid indication that is a combination of (a) and (b) above may be used. For notification using physical layer signaling, for example, DCI for a PDCCH may be used. The DCI may indicate information on DMRS frequency hopping (pattern).

In the case of notification using higher layer signaling, information on DMRS frequency hopping (pattern) may be associated with information indicating whether or not sequence hopping has been performed. For example, information pieces indicating that "no DMRS frequency performed" and "DMRS frequency hopping performed" may be associated with information pieces indicating that "sequence hopping performed" and "no sequence hopping performed", respectively. Alternatively, separately from sequence hopping, notification of information on DMRS frequency hopping (pattern) may be provided using higher layer signaling.

Information on DMRS frequency hopping (pattern) may be identified by a combination of a plurality of information pieces, examples of which have been stated above.

### (Others)

In the above-described embodiment, a size (symbol count) of a control channel (may be one or both of a PDCCH and a PUCCH) in the time direction is not limited to two, but may be zero, one or three. A PDCCH signal may be inserted in a part of a symbol.

An arranged position of a DMRS is not limited to a third symbol in one slot. For example, an arranged position of a DMRS may be a fourth symbol in one slot, or a first symbol of a data channel (for example, a PUSCH) or a second symbol of the PUSCH.

The number of symbols on which a DMRS is arranged is not limited to one. For example, a DMRS may be arranged over two symbols that are a third symbol and a fourth symbol in one slot or may be arranged over two symbols that are a fourth symbol and a fifth symbol in one slot.

### (Terms)

The PDSCH may be called a downlink data channel. The PUSCH may be called an uplink data channel. The PDCCH may be called a downlink control channel. The PUCCH may be called an uplink control channel.

An embodiment of the present invention has been described above.

### (Hardware Configuration)

The block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

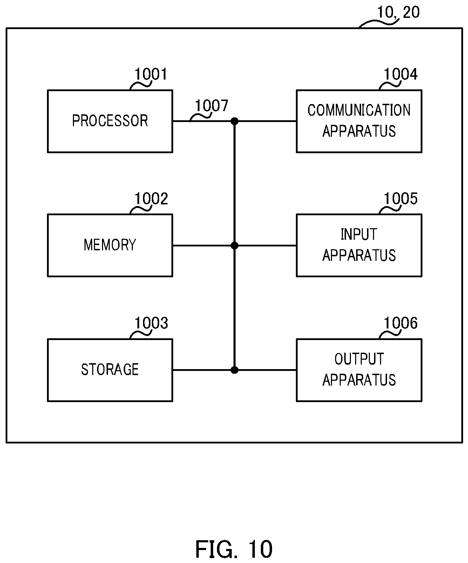

For example, radio base station 10, user terminal 20, and the like according to an embodiment of the present invention may function as a computer that executes processing of a radio communication method of the present invention. FIG. 10 illustrates an example of a hardware configuration of radio base station 10 and user terminal 20 according to an embodiment. Radio base station 10 and user terminal 20 as described above may be physically constituted as a computer apparatus including processor 1001, memory 1002, storage 1003, communication apparatus 1004, input apparatus 1005, output apparatus 1006, bus 1007, and the like.

The term "apparatus" in the following description may be replaced with a circuit, a device, a unit, or the like. The hardware configurations of radio base station 10 and of user terminal 20 may include one apparatus or a plurality of apparatuses illustrated in FIG. 10 or may not include part of the apparatuses.

For example, although one processor 1001 is illustrated, there may be a plurality of processors. The processing may be executed by one processor, or the processing may be executed by one or more processors at the same time, in succession, or in another manner. Processor 1001 may be implemented by one or more chips.

The functions in radio base station 10 and user terminal 20 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, scheduler 101, transmission signal generation sections 102 and 206, coding and modulation sections 103 and 207, mapping sections 104 and 208, control sections 108 and 203, channel estimation sections 109 and 204, demodulation and decoding sections 110 and 205, and the like as described above may be implemented by processor 1001.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, scheduler 101 of radio base station 10 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. The program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication method according to an embodiment of the present invention.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmission sections 105 and 209, antennas 106 and 201, reception sections 107 and 202, and the like as described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, radio base station 10 and user terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, MME (Mobility Management Entity) or S-GW (Serving Gateway)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

The terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station," "eNB," "gNB," "cell," and "sector" can be interchangeably used in the present specification. The base station may be called a fixed station, a NodeB, an eNodeB (eNB), a gNodeB (gNB), an access point, a femto cell, a small cell, or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (for example, looking up in a table, a database or another data structure), ascertaining and the like. Also, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. Also, the DMRS may be called by any of other corresponding names, for example, a demodulation RS, a DM-RS or the like.

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (OFDM (Orthogonal Frequency Division Multiplexing) symbol, SC-FDMA (Single Carrier-Frequency Division Multiple Access) symbol, or the like) in the time domain.

The radio frame, the subframe, the slot, the mini-slot, and the symbol indicate time units in transmitting signals. The radio frame, the subframe, the slot, the mini-slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a TTI (Transmission Time Interval).

For example, one subframe, a plurality of continuous subframes, one slot, or one mini-slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may include a length of one slot, one mini-slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the number of mini-slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and the like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While an embodiment of the present invention has been described, it is obvious to those skilled in the art that the present invention is not limited to the embodiments described in the present specification. Modifications and variations of the aspects of the present invention can be made without departing from the spirit and the scope of the present invention defined by the description of the appended claims. Therefore, the description of the present specification is intended for exemplary description and does not limit the present invention in any sense.

### Industrial Applicability

An aspect of the present invention is useful for a mobile communication system.

### Reference Signs List

- 10: Radio Base Station
- 20: User Terminal
- 101: Scheduler
- 102, 206: Transmission Signal Generation Section
- 103, 207: Coding and modulation section
- 104, 208: mapping section
- 105, 209: transmission section
- 106, 201: antenna
- 107, 202: reception section
- 108, 203: control section
- 109, 204: channel estimation section
- 110, 205: demodulation and decoding section

## Claims

1. A radio transmission apparatus, comprising:
a transmission section that transmits a radio link signal including a demodulation reference signal; and
a control section that performs hopping of a position at which the demodulation reference signal is mapped to a radio resource for the radio link signal to a different frequency at a different time.

2. The radio transmission apparatus according to claim 1, wherein, in a case where a plurality of the demodulation reference signals are mapped dispersedly in a time direction in a unit time of the radio resource, the control section performs the hopping of the plurality of demodulation reference signals individually.

3. The radio transmission apparatus according to claim 1, wherein the control section performs hopping of the position at which the demodulation reference signal is mapped to a frequency that is different depending on each of unit times of the radio resource.

4. A radio reception apparatus, comprising:
a reception section that receives a radio link signal including a demodulation reference signal; and
a processing section that performs reception processing of the radio link signal using the demodulation reference signal, wherein
hopping of a position at which the demodulation reference signal is mapped to a radio resource for the radio link signal is performed to a different frequency at a different time.

5. The radio reception apparatus according to claim 4, wherein a plurality of the demodulation reference signals are mapped dispersedly in a time direction in a unit time of the radio resource, and the hopping of the plurality of demodulation reference signals is performed individually.

6. The radio reception apparatus according to claim 4, wherein hopping of the position at which the demodulation reference signal is mapped to the radio resource is performed to a frequency that is different depending on each of unit times of the radio resource.
